# EUROPEAN PATENT APPLICATION

(11) **EP 3 798 849 A1**
(43) Date of publication of application: **31.03.2021**
(21) Application number: 19199317.9
(22) Date of filing: 24.09.2019
(51) Int. Cl.: G06F 11/36, G06F 30/33

(54) **METHOD AND APPARATUS FOR COMPUTER-IMPLEMENTED VERIFICATION OF THE BEHAVIOR OF A TECHNICAL SYSTEM**

(71) Applicant: Siemens Aktiengesellschaft, 80333 München (DE); Friedrich-Alexander-Universität Erlangen-Nürnberg, 91054 Erlangen (DE)
(72) Inventor: Moor, Thomas, 96172 Mühlhausen (DE); Tang, Yiheng, 91054 Erlangen (DE); Witte, Martin, 91126 Schwabach (DE)
(74) Representative: Maier, Daniel Oliver

(57) **Abstract**

A method for computer-implemented verification of the behavior of a technical system having a number of technical components (ROB, PM) interacting with each other under the control of respective software components is described. The method comprises the steps of: storing a formal representation of a sequential chart (SC) of the software components which specifies an intended order of activation and termination of multiple parallel processes executed by the technical components (ROB, PM) where at least some of the processes (P_1001, ..., P_2003) comprise an associated semantic annotation and/or condition; transforming the sequential chart (SC) to first automata models (AMS); storing a behavioral description (CL) representing its capabilities with regard to process activation and termination in a second storage device (22); transforming the behavioral description (CL) of the number of technical components (ROB, PM) to one or more second automata models (AMH); composing the first and the second automata models (AMS, AMH) to obtain an overall closed-loop model of the technical system representing the interaction of the software components and the technical components (ROB, PM); verifying the overall closed-loop model and providing an error information if a deviation from the intended order of the processes (P_1001, ..., P_2003) occurs on verification.

## Description

The invention relates to a method and an apparatus for computer-implemented verification of the behavior of a technical system having a number of technical components interacting with each other under the control of respective software components.

Technical systems are increasingly built on a variety of software components, for example in the form of a PLC (Programmable Logic Controller) code. Software components include reusable library modules as well as technical program code for a particular application at hand. The overall behavior of the technical system is thus determined by a large number of software components which are configured to interact in order to properly operate a technical component, such as a machine, or the technical system a whole.

In factory automation, an interaction between technical components takes place. To achieve a desired behavior of the interaction, it is crucial to verify the temporal properties of the sequential behavior of the different technical components, such as the order of activation and completion of individual processes which operate individual hardware components, i.e. technical components, of the technical system.

By present engineering practice and, in particular, in the context of factory automation, program code is validated by exhaustive testing on different levels. Methods from software engineering can be used to organize program code and test cases for individual software modules. The overall behavior of the technical system can then be simulated to operate a virtual version of the technical system, such that the behavior can be validated by inspection. Finally, one aims to identify and to eliminate remaining errors in the set-up phase of the actual technical system. However, all these approaches are cumbersome and inherently risk to miss out on individual errors, so the program code may still be incorrect to some extent.

It is an object of the present invention to provide a method and an apparatus which enable a computer-implemented verification of the behavior of a technical system.

These objects are solved by the independent claims. Preferred embodiments are set out in the dependent claims.

According to a first aspect of the present invention, a method for computer-implemented verification of the behavior of a technical system having a number of technical components interacting with each other under the control of respective software components is suggested. The technical system may be any technical system, such as a production plant, a factory automation, and so on. Technical components are components and/or machines which enable in interaction the desired functionality of the technical system. Each of the technical components is controlled by a software component. The software component may be executed by a respective processing unit of the technical system. Alternatively, all software components controlling a respective technical component may be executed by a central processing unit, such as a server system.

The method according to the invention comprises the following steps:
a) As a first step, a formal representation of a sequential chart of the software components is stored in a first storage device. The sequential chart specifies an intended order of activation and termination of multiple parallel processes executed by the technical components. At least some of the processes comprise an associated semantic annotation and/or condition. The annotations and/or conditions may be domain specific. By such annotations and/or conditions, it is indicated which variables from the overall process image are affected by the individual processes.
b) As a next step, the formal representation of a sequential chart is received, by an interface, from the first storage device. A sequential chart is transformed by a processing unit to first automata models. While the sequential chart is a state based and/or signal-level based representation, the first automata models enable analysis and composition in a formal language framework.
c) As a next step, for each technical component, a behavioral description representing its capabilities with regard to process activation and termination is stored in a second storage device. The behavioral description may be provided from the manufacturer of the technical component in form of a library.
d) As a further step, the behavioral description of the number of technical components is received, by the interface, from the technical storage device. The behavioral description of the number of technical components is transformed, by the processing unit, to one or more second automata models. Similarly, to the sequence charts in step b), the second automata models are abstract in that they only describe how the respective technical component affects the distinguished portion of an overall process image. Effectively, the second automata models represent the relevant dynamic behavior of the technical system prior to applying any control.
   Above steps a) to d) may be executed in the order as outlined above. However, storing of the formal representation of a sequential chart (step a)) and storing a behavioral description for each hardware component (step c)) may be conducted in parallel or in any desired order. Receiving the respective information from the first and the second storage device (steps b) and d)) may be performed in parallel or in any sequence.
   Receiving the formal representation of the sequential chart (step b)) and receiving the behavioral description of the number of technical components (step d)) may be made via the same interface. In this embodiment, this information may be transferred to a single processing unit which executes the transformation into the first automata models and the second automata models. However, it is to be understood that the steps b) and d) of transforming may be performed by different processing units as well.
e) As a further step, the first and the second automata models are composed, by the processing unit, to obtain an overall closed-loop model of the technical system representing the interaction of the software components and the hardware components. According to this step, the uniformly transformed formal representation of the sequential chart resulting in the first automata models and the behavioral description resulting in the one or more second automata models is composed into a modular automata model that represents the interaction of the software components and the technical components.
f) In a last step, the overall closed-loop model is verified by the processing unit. An error information is provided if a deviation from the intended order of the processes occurs on verification. According to this step, the modular automata model is verified to exhibit desired properties. This can be done by methods from computer science.
   During the step of verifying the overall closed-loop model undesired race conditions may be identified. Alternatively or in addition, temporal properties of at least one of the processes may be verified. According to a preferred embodiment, the step of verifying the overall closed-loop model may be performed by model checking or graph based heuristic algorithms.

The method described above enables a semantic analysis of the sequential charts in closed-loop configuration with the technical components of the technical system. The steps according to the method of the invention can be integrated in a computer aided development environment. The formal representation of the sequential chart of the software components as well as the behavioral description representing the capabilities of each hardware component are stored in respective storage devices. These preparatory steps may be provided by a user of a computer system which is adapted to carry out the method as described above. The transformation and the verification according to steps b) and d) will be automatically performed by the processing unit of a computing system. A user of that computing system receives feedback in form of an error report containing one or more error information if a deviation from the intended order of the processes occurs on verification of the modular automata model consisting of the first and second automata models. In contrast to a mere syntactic validation, this approach enables a semantic analysis of the sequence chart in the closed-loop configuration with the technical system.

As an advantage resulting from the transformation of the sequential chart into the first automata models it is possible to trace back errors reported by the verification procedure in step f) for interpretation of a user of the computing system within the context of the sequential chart provided in the storage device. If an error information is provided by the computing system, the involved processes can be retrieved and indicated via a human-machine-interface (such as a display) to the user of the computing system.

Once the verification step indicates a correct design, i.e. no error information is provided in step f), code to schedule the individual processes may be automatically generated from the first automata models.

The formal representation of the sequential chart may be based on Unified Modelling Language (UML) or variations thereof. In the domain of factory automation, the sequential chart may be represented as a Sequential Behavior Diagram (SBD) defined by Interdisciplinary Modelling Language (IML). IML may be used, as will be apparent to the skilled person, in any other technical domain as well, if appropriate.

While an automaton is a mathematical construct, an automaton model is a type of behavior model of real components, using automatons.

The formal representation of a sequential chart of the software components is augmented with additional syntactic and semantic annotations to address a specific application domain of the technical system. The annotations and/or conditions may be domain specific. By such annotations and/or conditions, it is indicated which variables from the overall process image are affected by the individual processes. According to that, the condition associated to the at least one process (specified in the sequential chart) comprises a pre-condition that must be satisfied when the process becomes activated. Alternatively or in addition, the condition associated to the at least one process comprises a post-condition which is guaranteed to be satisfied upon completion of the process. Alternatively or in addition, the condition associated to the at least one process comprises a termination condition which, when satisfied, indicates that the process will not affect an overall process image at a given point in time any longer. The overall process image is defined as the set of all states of the plant or machine known to the automation system, i.e. physically, the input and output variables of a controller.

According to a further embodiment, the semantic annotation associated to the at least one process may indicate which variables from the overall process are affected by individual processes.

The process in the sequential chart may be arranged in two or more parallel lanes (sometimes referred to as "swim lanes") extending between a fork transition and a merge transition.

According to a further preferred embodiment, the step of transforming the sequential chart into the first automata models comprises the following steps. As a first partial step, the sequential chart is transformed without the semantic annotations and/or the conditions associated to the at least one process into a reachability automaton, where individual states indicate which processes are active and where transition labels indicate which processes are terminated and which processes become activated. As a second partial step, individual automata for the semantic annotations and/or the conditions associated to the at least one process are generated. The entire transformation procedure will be performed automatically be the processing unit. It results in a modular automata representation which is readily extended by additional types of semantic annotations. Effectively, the modular automata representation obtained describes the behavior of all software components prior to its interconnection with the technical components of the technical system.

The method as described above has a plurality of advantages.

The formal sequence chart and their first automata models can be used to automatically synthesis program code to schedule individual processes. Effectively, this approach eliminates any errors in that sense that the implemented behavior is guaranteed to match the sequence chart.

By the verification of the overall modular automaton model consisting of the first and the second automata models, errors can be automatically identified in the sequence chart in their relation to the actual technical components. The identification of race-conditions is possible which are clearly undesired and which constitute a wide common error type. To be able to identify race-conditions analysis of additional semantic and/or synthetic annotations and/or conditions is crucial.

As a result, this enables the automatic generation of program code which is guaranteed to be error-free with regard to the order of process activation and completion, if the step of verification does not provide any error information.

The procedure described contributes to the development of integrated software tools that support the workflow in present and future technical systems, such as factory automation. This is useful for validating SFC, a Petri-net type of sequence description used in PLC based automation programming, as defined in IEC 61131 which defines actions of a machine or synchronize robots in a work-cell. It is additionally advantageous that the sequence can be generated by an algorithm, based on formal machine skills, in that it incorporates formalized correct and erroneous machine behavior. This last use case is relevant for flexible or autonomous automation systems.

Beside factory automation, this procedure may be used in a definition of test sequences, with well-defined pre- and post-conditions of each test and a formal definition of the test case behavior.

According to a second aspect, a computer program product with program code is suggested which is stored on a non-transitory machine-readable carrier, for carrying out the method as described herein when the program code is executed on a computer.

According to a third aspect, a computer program with program code for carrying out the method as described herein is suggested when the program code is executed on a computer.

According to a fourth aspect of the present invention, an apparatus for computer-implemented verification of the behavior of a technical system having a number of technical components interacting with each other under the control of respective software components is suggested. The apparatus comprises the following technical components:
A first storage device for storing a formal representation of a sequential chart of the software components, wherein the sequential chart specifies an intended order of activation and termination of multiple parallel processes executed by the technical components where at least some of the processes comprise an associated semantic annotation and/or condition. The formal representation of the sequential chart may be provided by a user or developer of the technical system.

A second storage device for storing, for each hardware component, a behavioral description representing its capabilities with regard to process activation and termination. The second storage device may be a different storage device from the first storage device. However, the first and the second storage device may be the same storage device. The information stored in the first storage device and the second storage device may be stored in a database, for example. The information is stored in a machine-readable manner.

An input receiving component having an interface for receiving the formal representation of a sequential chart from the first storage device, and for receiving the behavioral description of the number of technical components from the second storage device.

A processing unit for transforming the sequential chart to first automata models, for transforming the behavioral description of the number of technical components to one or more second automata models, for composing the first and the second automata models to obtain an overall closed-loop model of the technical system representing the interaction of the software components and the technical components, and for verifying the overall closed-loop model and providing an error information if a deviation from the intended order of the processes occurs on verification.

The input receiving component having the interface and the processing unit may be part of a computing system or computer, such as a single computer or a distributed computer system.

The apparatus as set out above comprises the same advantages as described in conjunction with the method according to the invention.

The invention will be described more detailed by reference to the accompanying figures.
- Fig. 1: shows a schematic diagram illustrating the steps according to the present invention.
- Fig. 2: illustrates a computing system for carrying out the method according to the present invention.
- Fig. 3: shows a schematic diagram of an exemplary process scheme.
- Fig. 4: illustrates a sequential behavior diagram describing the process scheme of Fig. 3.
- Fig. 5: shows a reachability automaton resulting from the sequential behavior diagram according to Fig. 4.
- Figs. 6 to 11: illustrate automatons for different variables of the reachability automaton in Fig. 5.

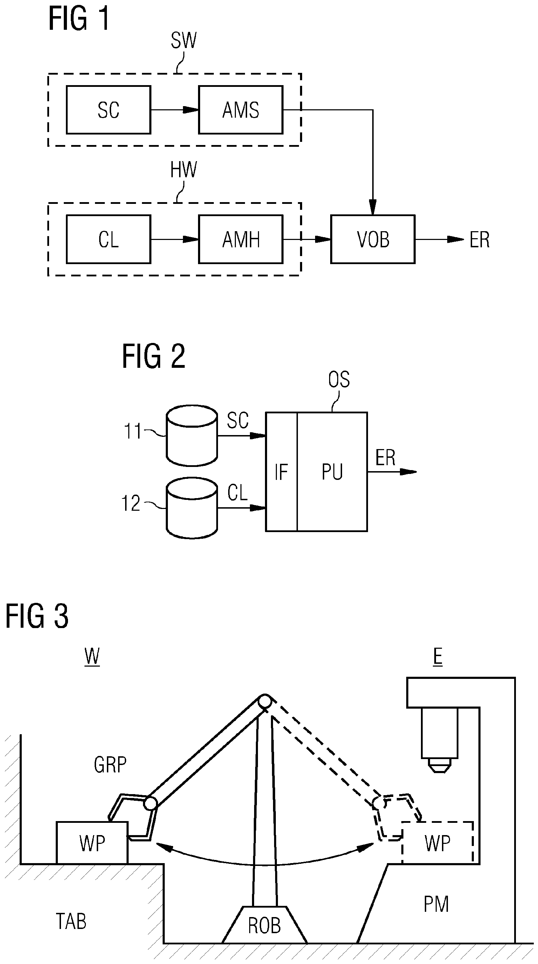

Fig. 1 shows a schematic diagram of a method for computer-implemented verification of the behavior of a technical system according to the invention. The technical system which is not illustrated in Fig. 1 has a number of technical components which interact with each other under the control of respective software components. The technical system may be an arbitrary technical system, such as a production plant, a factory automation, and so on. The software components used for controlling a respective technical component may be in the form of a PLC (Programmable Language Code) code. The software components may include reusable library modules as well as tailored program code for a particular application of the technical component. The overall behavior of the technical system is determined by the number of software components of the technical components which are configured to interact in order to properly operate the technical system.

The method as described below enables a systematic and automated verification of whether or not a given sequential behavior of the technical components exhibits the properties it was designed for. To do so, the following approach is applied.

In a first or preparatory step, a formal representation of a sequential chart SC of the software components of the technical system is stored in a first storage device 11 (Fig. 2). The formal representation of the sequence chart SC is used to specify the intended order of activation and termination of multiple parallel processes. In general, such a representation can be based on the well-known Unified Modelling Language (UML) activity diagrams or on variations thereof. Depending on the technical domain, Sequential Behavior Diagrams (SBDs) which are defined by the Interdisciplinary Modelling Language (IML) may be used as well. Such a particular technical domain may be factory automation. The representation of the processes may be augmented with additional syntactic and semantic annotations to address the specific application domain. At least some of the processes specified in the sequential chart SC comprise an associated semantic annotation and/or condition.

By such annotations and/or conditions it is indicated which variables from an overall process image are affected by individual processes. For that reason, at least some of the processes defined by the sequential chart comprise a pre-condition that must be satisfied when the process becomes activated. One or more of the processes may comprise a termination condition which, when satisfied, indicates that the associated process will not affect the process image any longer. Alternatively or additionally, at least some of the processes comprise a post-condition which is guaranteed to be satisfied upon completion. Furthermore, an annotation may comprise an information when an individual process takes effect on particular variables immediately on activation. Although the actual PLC code of the software components that implements individual processes is hidden at this level of abstraction, the annotations and/or conditions in the sequential chart SC ensure that these aspects are made transparent that are relevant for the subsequent verification task.

In a next step, the sequential chart SC is transformed to first automata models AMS. The transforming is made by means of a processing unit PU. The processing unit PU receives the sequential chart SC from an interface IF which receives or retrieves the formal representation of the sequential chart SC from the first storage device 11 (Fig. 2). The interface IF and the processing unit PU are part of a computing system CS.

While the sequential chart SC is a state-based and/or signal level-based representation, the first automata models enable analysis and composition in a formal language framework. In particular, individual semantic annotations and/or conditions can be represented by individual automata models.

Transforming the sequential chart SC into the first automata models AMS comprises of two partial steps.

As a first partial step, the sequential chart SC is transformed without the semantic annotations and/or the conditions associated to the at least one process into a reachability automaton, where individual states indicate which processes are terminated and which processes become activated. As a second partial step, individual automata for the semantic annotations and/or the conditions associated to the at least one process are generated. The entire transformation procedure into the fist automata models AMS can be performed automatically. It results in a modular automata representation, which is readily extended by additional types of semantic annotations. Effectively, the modular automata representation in the form of the first automata models AMS obtained at this stage describes the behavior of the program code of the software components of the technical system prior to its interconnection with the technical components. This is indicated in Fig. 1 by the dashed line surrounding the blocks SC and AMS and having the reference numeral SW.

Similarly, a formal representation of the technical components (also called hardware components) is provided. The two necessary steps are indicated by the rectangular with the dashed lines indicated by HW.

As a first or preparatory step, for each technical component, a behavioral description CL is stored. The behavioral description represents the capabilities of each of the technical components with regard to process activation and termination. The behavioral description CL is stored in a second storage device 12 (Fig. 2). The storage devices 11, 12 may be different storage devices. However, the formal representation of the sequential chart SC and the behavioral description CL of the number of technical components may be stored in the same storage device.

The behavioral description CL of the number of technical components is transformed into one or more second automata models AMH. The step of transformation is executed by the processing unit PU. The behavioral description CL is therefore received from the interface IF from the second storage device 12. The one or more second automata models AMH represent the capabilities of each of the technical components of the technical system. The behavioral description CL can be provided from the manufacturer of the technical component in form of a library. The one or more second automata models are abstract in that they only describe how the respective technical component affects the distinguished portion of the overall process image. Effectively, the second automata models AMH represent the relevant dynamic behavior of the technical system prior to applying any control by means of respective software components.

The first and the second automata models AMS, AMH are composed by the processing unit PU to obtain an overall closed-loop model of the technical system which represents the interaction of the software components and the technical components of the technical system. The result is a modular automata model that represents the interaction of the software components and the physical components of the technical system. This modular automata models comprising the first and second automata models AMS, AMH can then be verified to exhibit desired properties by methods from computer science, such as model checking. Composing the first and the second automata models AMS, AMH and verifying the overall closed-loop model is represented by the box VOB in Fig. 1. The verification process will be used to identify undesired race-conditions for parallel conditions and/or verifying temporal properties of at least one of the processes of the sequential chart. The result of this verification may be expressed by logics, such as LTL or CTL.

In case that the verification comes to the result that a deviation from the intended order of the processes of the sequential chart occurs, an error information ER is provided. The error information ER can be provided at a human-machine-interface of the processing unit for interpretation by a user of the processing unit within the context of the sequential chart SC. This enables retrieving the involved processes and indicating them to the user for fixing the problem.

Once the verification indicates a correct design, appropriate code to schedule the individual processes can be generated automatically from the automata stage.

Fig. 3 illustrates an example of a simple technical system which will be used to describe the method according to the invention more detailed. The technical system comprises a transport robot ROB having a gripper GRP to grab and release a work-piece WP and to rotate between a table TAB in west orientation W and a processing machine PM in east position E. The processing machine PM is adapted to process the work-piece WP when present. Placing the work-piece WP on the table TAB as well as removing it from the processing machine PM is accomplished manually or by some external devices and shall not be further considered in this simple example.

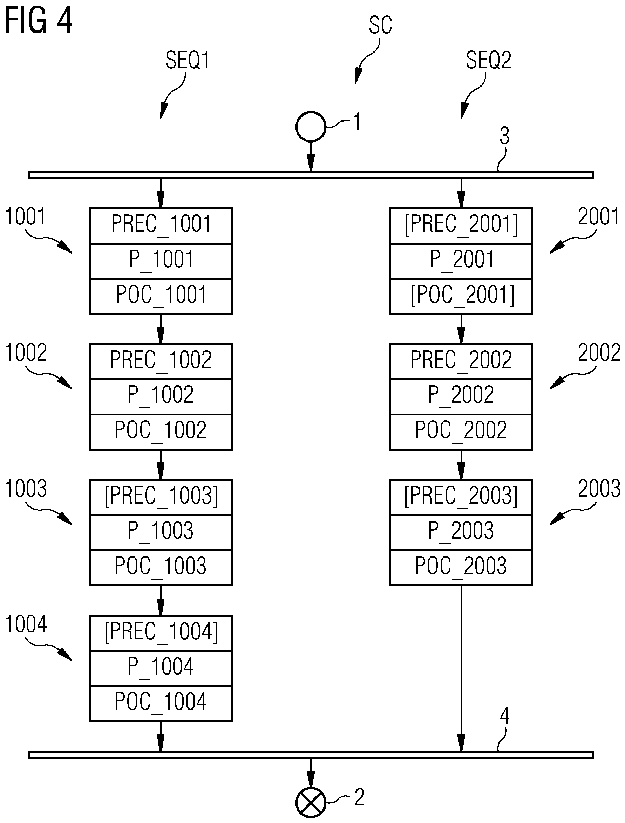

To specify the intended behavior of the robot ROB, a sequential chart SC in the form of a sequential behavior diagram (SBD) is used. The SBD is illustrated in Fig. 4. In the SBD, the transportation of the work-piece WP by the robot ROB and the processing of the work-piece WP by the processing machine PM are considered as two parallel sequences SEQ1, SEQ2 of individual processes. The individual processes of the sequence SEQ1 are denoted with 1001, 1002, 1003 and 1004 where the actual process is indicated within the rectangular by P_X, where X corresponds to the process 1001, ..., 1004. The processes of the sequence SEQ2 are denoted with 2001, 2002 and 2003, where the actual processes within the rectangular are indicated by P_Y with Y = 2001, ..., 2003. The actual processes P_X, P_Y consist of the software code intended for a desired activity.

The two individual parallel sequences SEQ1, SEQ2 are also referred to as swim lanes, where the left lane accounts for the robot ROB while the right line accounts for the processing machine PM. The two sequences SEQ1, SEQ2 or swim lanes have to be synchronized such that no physical collision between the robot ROB and the processing machine PM can happen. This means, the robot ROB must transport a new work-piece WP to the processing machine PM only when the most recent work-piece has been removed from the processing machine PM.

The overall process image includes the variables given by table 1, where initial values are indicated by an underline.

**Table 1: List of variables and their values**

| Variable | Value | Description |
|---|---|---|
| WP available table | true, false | True when a WP is on the table |
| WP available PM | true, false | True when a WP is on the processing machine |
| WP grabbed | true, false | True when a WP is grabbed by the gripper |
| Robot at west | true, false | True when robot arm at west |
| Robot at east | true, false | True when robot arm at east |
| PM status | idle, busy, done | Status of the processing machine |

In the sequential chart SC of Fig. 4, the specified variables are part of optional pre- and post-conditions PREC_X, PREC_Y and POC_X, POC_Y (where X = 1001, ..., 1004 for the processes of the sequence SEQ1 carried out by the robot ROB and Y = 2001, ..., 2003 for the processes of the sequence SEQ2 carried out by the processing machine PM). If a process P_X, P_Y in the present example does not have a pre-condition and/or a post-condition, the term "PREC_X", "PREC _Y" and/or "POC_X", "POC_Y" is written in squared brackets ("[]"). The specified variables in the pre- and post-conditions PREC_X, PREC_Y and POC_X, POC_Y are used to implement the required synchronization between the robot ROB and the processing machine PM. In the graphical representations, pre-conditions PREC_X, PREC Y are given at top of the process nodes P_X, P_Y, while post-conditions POC_X, POC_Y are given at the bottom of the process nodes P_X, P_Y.

While in Fig. 4 the processes P_X, P_Y have generic names, the processes and pre- and post-conditions according to the example in Fig. 3 will be as follows.
Process 1001
   Process name: P_1001 = ROB _GrabWP.
   Process P_1001 comprises pre-conditions PREC _1001: WP available table = true, Robot at west = true and WP grabbed = false. Process P_1001 comprises a post-condition POC_1001: WP grabbed = true.
Process 1002
   Process name: P_1002 = ROB _RotateToEast
   Process P_1002 comprises a pre-condition PREC _1002: WP available PM = false. Process P_1002 comprises a post-condition POC_1002: Robot at east = true.
Process 1003:
   Process name: P_1003 = ROB _ReleaseWP.
   Process 1003 does not have a pre-condition PREC 1003 which is indicated by the squared brackets. Process 1003 comprises a post-condition POC_1003: WP grabbed = false.
Process 1004:
   Process name: P_1004 = ROB _RotateToWest.
   Process 1004 does not have a pre-condition. Process 1004 comprises a post-condition POC_1004: Robot at west = true.
Process 2001:
   Process name: P_2001 = PM_Wait.
   Process 2001 neither comprises a pre-condition nor a post-condition.
Process 2002:
   Process name: P_2002 = PM_ProcessBegin.
   Process 2002 comprises pre-conditions PREC _2002: WP available PM = true and Robot at east = false. Process 2002 comprises a post-condition POC_2002: PM status = done.
Process 2003:
   Process name: P_2003 = PM_ProcessEnd.
   Process 2003 does not comprise a pre-condition. Process 2003 comprises a post-condition POC_2003: PM status = idle.

When the sequential chart SC is activated, a token is installed at an initial node 1. The token passes a transition fork 3 once the pre-conditions of the subsequent process node P_1001 = ROB _GrabWP are satisfied, i.e. once the reference variables take the specified values. Then, the token will be taken from the initial node 1 and one token each will be placed at node 1001 and node 2001 (P_1001 = PM_Wait), respectively, and the two processes P_1001 and P_2001 become activated. Now that the two sequences SEQ1, SEQ2 have received their tokens, they get passed onto the respective subsequent process in compliance with the specified pre- and post-conditions. This mechanism is repeated until the tokens reach the merge node 4 in Fig. 4, to be subsequently swallowed by the exit node 2. Then, the sequential chart SC is terminated.

Inspecting the two parallel sequences SEQ1, SEQ2 in detail, pre- and post-conditions PREC_X, PREC_Y, POC_X, POC_Y are organized such that, after grabbing the work-piece WP, the robot ROB attempts to send it to the processing machine PM whenever there is no work-piece WP on the processing machine PM. After releasing the work-piece WP at the processing machine PM, the robot ROB turns back to the west position W indicating completion of the left sequence SEQ1. The processing machine PM will not begin processing unless a work-piece WP is placed on it. The robot ROB will not be in the east position E while a work-piece WP is processed by the processing machine.

After having provided the sequential chart SC as illustrated in Fig. 4, the transformation to the first automata model AMS is performed. The first automata model represents the behavior specified by the sequential chart SC in Fig. 4. Considering the aforementioned example, the transformation is performed as follows:

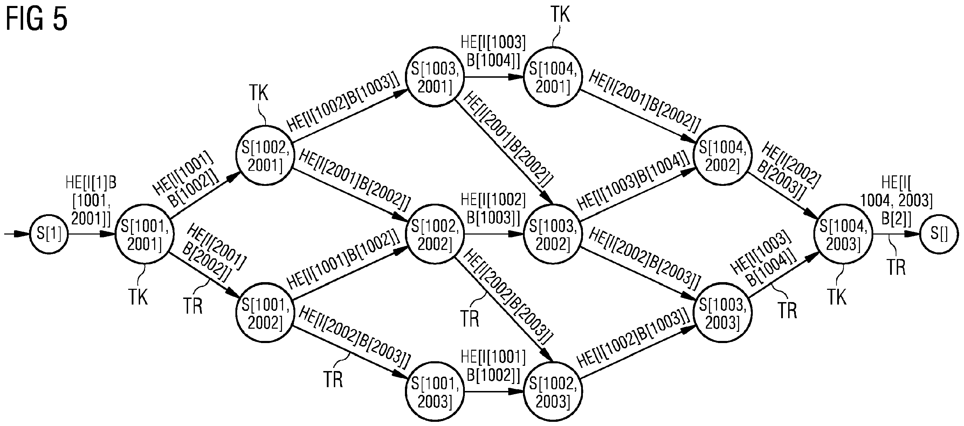

As a first step, the sequential chart SC is transformed into a reachability graph as outlined in Fig. 5. The transformation is similar to the common construction of the reachability graph for a petri-net. Each node TK of the graph (shown as circles in Fig. 5) corresponds to a specific token configuration of the sequential chart SC, i.e., each node has an associated set of active processes. In Fig. 5, the node labels are of the form S[...], where within the brackets the active processes are listed; e.g., in node S[1001,2001] the processes 1001 and 2001 from the sequential chart SC in Fig. 4 are active. The edges of the reachability graph (shown as arrows in Fig. 5) represent transitions from one token configuration to a successive token configuration. In contrast to the plane reachability graph of a petri-net, transitions labels TR are added to indicate which processes are terminated and which processes are activated when taking the respective transition. In Fig. 5, the transition labels are of the form HE [I [...], B [...] ], where within the first pair of brackets the processes to be terminated are listed, while within the second pair of brackets the processes to be activated are listed. E.g., the transition from node S[1001,2001] labeled HE[I[2001],B[2002]] terminates process 2001 and activates process 2002 and thereby proceeds to node S[1001,2002]. The transition labels TR turns the graph into an automaton, where the nodes become the states. The transition labels are crucial for a modular automata representation.

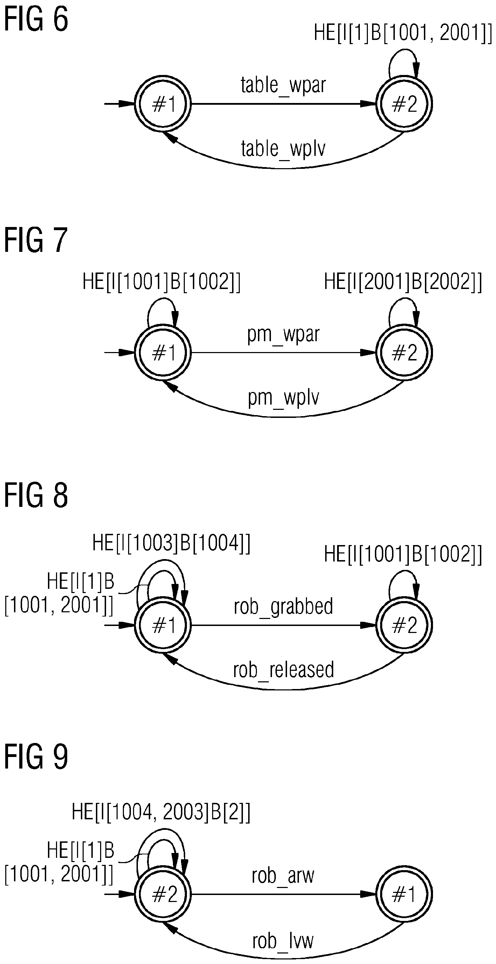

As a next step, for each variable referenced in any pre- or post-condition an automaton is constructed to tack the value of the respective variable. For this purpose, the transition labels from table 2 are used. For each variable and for each value of its respective range, table 2 introduces one label with the semantics "the value of this variable has changed to that value". For the six variables given in table 2, the corresponding automata are given in Figs. 6 to 11, respectively. Fig. 6 illustrates the automaton for variable "WP available table". In the figure, states are shown as circles and transitions are shown as arrows. The initial state #1 corresponds the variable "WP available table" to evaluate "false",while state #2 corresponds the variable "WP available table" to evaluate "true". The transition labeled "table_wpar" indicates the arrival of a workpiece and leads to state #2, while the transition labeled "table_wplv" indicates that the workpiece left the table and leads to state #1. Since each state corresponds to a specific evaluation of "WP available table", this automaton can be used to guard the transitions of the reachability automaton, depending on the respective pre- and post-conditions. E.g., the transition HE[I[1]B[1001,2001]] activates the processes 1001 and 2001. By the pre-condition of process 1001 this requires the variable "WP available table" to evaluate true and, hence, must only take place when the automaton in Fig. 6 is in state #2. Therefore, a corresponding self-loop with label HE[I[1]B[1001,2001]] is only included in state #2. For its role in the transformation procedure, the automaton in Fig. 6 is referred to as a guard automaton.

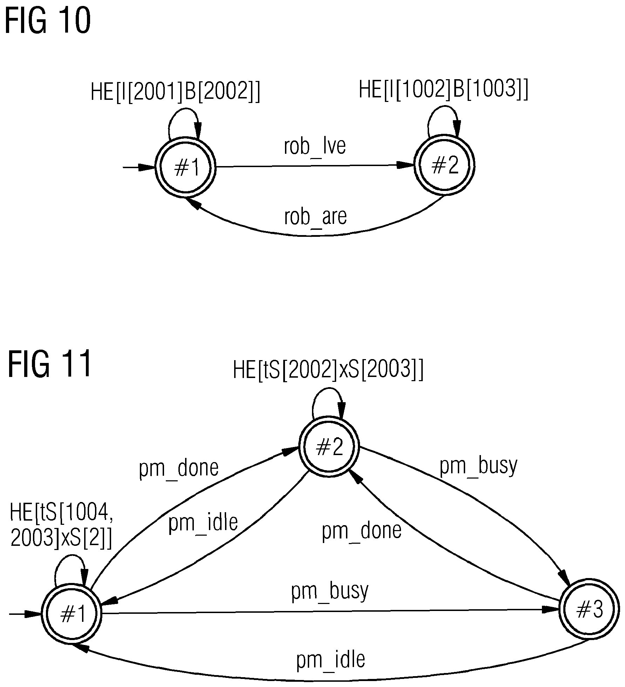

The remaining guard automata are constructed by the same principles: Fig. 7 illustrates the automaton for variable "WP available PM", Fig. 8 illustrates the automaton for variable "WP available grabbed", Fig. 9 illustrates the automaton for variable "Robot at west", Fig. 10 illustrates the automaton for variable "Robot at east", and Fig. 11 illustrates the automaton for variable "PM status".

**Table 2: List of events for each variable**

| Variable | Events |
|---|---|
| WP available table | table_wpar (true), table_wplv (false) |
| WP available PM | pm_wpar (true), pm_wplv (false) |
| WP available grabbed | rob_grabbed (true), rob_release (false) |
| Robot at west | rob_arw (true) rob_lvw (false) |
| Robot at east | rob_are (true) rob_lve (false) |
| PM status | pm idle (idle), pm busy (busy), pm done (done) |

Composing of all automata is done by common product composition. Effectively, the structure of the reachability graph in Fig. 5 will be preserved while taking pre- and post-conditions into account. In the given example, the resulting automaton counts about 3000 states. When for more involved sequential charts SC the state account is beyond representation by enumeration based methods, they can be resorted to symbolic representations by, e.g., binary decision diagrams (BDD) .

## Claims

1. A method for computer-implemented verification of the behavior of a technical system having a number of technical components (ROB, PM) interacting with each other under the control of respective software components, comprising the steps of:
a) storing a formal representation of a sequential chart (SC) of the software components in a first storage device (11), wherein the sequential chart (SC) specifies an intended order of activation and termination of multiple parallel processes executed by the technical components (ROB, PM) where at least some of the processes (P_1001,...,P_2003) comprise an associated semantic annotation and/or condition;
b) receiving, by an interface (IF), the formal representation of a sequential chart (SC) from the first storage device (11) and transforming, by a processing unit (PU), the sequential chart (SC) to first automata models (AMS);
c) storing, for each technical component (ROB, PM), a behavioral description (CL) representing its capabilities with regard to process activation and termination in a second storage device (12);
d) receiving, by the interface (IF), the behavioral description (CL) of the number of technical components (ROB, PM) from the second storage device (12) and transforming, by the processing unit (PU), the behavioral description (CL) of the number of technical components (ROB, PM) to one or more second automata models (AMH);
e) composing, by the processing unit (PU), the first and the second automata models (AMS, AMH) to obtain an overall closed-loop model of the technical system representing the interaction of the software components and the technical components (ROB, PM);
f) verifying the overall closed-loop model and providing an error information if a deviation from the intended order of the processes (P_1001,...,P_2003) occurs on verification.

2. The method according to claim 1, wherein the formal representation of the sequential chart (SC) is based on Unified Modeling Language (UML) or variations thereof.

3. The method according to claim 1 or 2, wherein the sequential chart (SC) is a sequential behavior diagram defined by Interdisciplinary Modeling Language (IML).

4. The method according to one of the preceding claims, wherein the condition associated to the at least one process (POC_1001,...,PRE_2003) comprises a pre-condition that must be satisfied when the process becomes activated.

5. The method according to one of the preceding claims, wherein the condition associated to the at least one process (POC_1001,...,PRE_2003) comprises a post-condition (POC_1001,...,PRE_2003) which is guaranteed to be satisfied upon completion of the process.

6. The method according to one of the preceding claims, wherein the condition associated to the at least one process (POC_1001,...,PRE_2003) comprises a termination condition which, when satisfied, indicates that the process (P_1001,...,P_2003) will not affect a process image at a given point in time any longer.

7. The method according to one of the preceding claims, wherein the semantic annotation associated to the at least one process (POC_1001,...,PRE_2003) indicates which variables form the overall process are affected by individual processes (P_1001,...,P_2003).

8. The method according to one of the preceding claims, wherein the processes (P1001,...,P_2003) in the sequential chart (SC) are arranged in two or more parallel lanes extending between a fork transition (3) and a merge transition (4).

9. The method according to one of the preceding claims,
wherein the step of transforming the sequential chart (SC) into the first automata models (AMS) comprises
= as a first partial step, transforming the sequential chart (SC) without the semantic annotations and/or the conditions associated to the at least one process (POC 1001,...,PRE 2003) into a reachability automaton, where individual states indicate which processes (POC_1001,...,PRE_2003) are active and where transition labels indicate which processes (POC_1001,...,PRE_2003) are terminated and which processes (POC_1001,...,PRE_2003) become activated; and
= as a second partial step, generating individual automata for the semantic annotations and/or the conditions associated to the at least one process (POC_1001,...,PRE_2003).

10. The method according to one of the preceding claims, wherein the steps of transforming the sequential chart (SC) to the one or more first automata models (AMS) and of transforming the behavioral description (CL) of the number of technical components (ROB, PM) to one or more second automata models (AMH) are performed such that the first and second automata models (AMS, AMH) have the same semantic and/or syntax.

11. The method according to one of the preceding claims, wherein the step of verifying the overall closed-loop model is performed by model checking.

12. The method according to one of the preceding claims, wherein the step of verifying the overall closed-loop model comprises identifying undesired race conditions for parallel conditions and/or verifying temporal properties of at least one of the processes (POC_1001,...,PRE_2003).

13. The method according to one of the preceding claims, wherein code to schedule the individual processes is automatically generated from the first automata models (AMS), if in the step of verifying the overall closed-loop model no error information has been provided.

14. A computer program product with program code, which is stored on a non-transitory machine-readable carrier, for carrying out a method according to one of claims 1 to 13 when the program code is executed on a computer.

15. A computer program with program code for carrying out a method according to one of claims 1 to 13 when the program code is executed on a computer.

16. An apparatus for computer-implemented verification of the behavior of a technical system having a number of technical components (ROB, PM) interacting with each other under the control of respective software components, comprising:
- a first storage device (11) for storing a formal representation of a sequential chart (SC) of the software components, wherein the sequential chart (SC) specifies an intended order of activation and termination of multiple parallel processes executed by the technical components (ROB, PM) where at least some of the processes (P_1001,...,P_2003) comprise an associated semantic annotation and/or condition;
- a second storage device (12) for storing, for each technical component (ROB, PM), a behavioral description (CL) representing its capabilities with regard to process activation and termination;
- an input receiving component having an interface (IF) for
= receiving the formal representation of a sequential chart (SC) from the first storage device (11); and
= receiving the behavioral description (CL) of the number of technical components (ROB, PM) from the second storage device (12);
- a processing unit (PU) for
= transforming the sequential chart (SC) to one or more first automata models (AMS);
= transforming the behavioral description (CL) of the number of technical components (ROB, PM) to one or more second automata models (AMH);
= composing the first and the second automata models (AMS, AMH) to obtain an overall closed-loop model of the technical system representing the interaction of the software components and the technical components (ROB, PM); and
= verifying the overall closed-loop model and providing an error information if a deviation from the intended order of the processes (P-1001,...,P_2003) occurs on verification.
